# EUROPÄISCHE PATENTSCHRIFT

(11) **EP 1 588 071 B1**
(45) Veröffentlichungstag und Bekanntmachung des Hinweises auf die Patenterteilung: **04.03.2009**
(21) Anmeldenummer: 03779543.2
(22) Anmeldetag: 11.12.2003
(51) Int. Cl.: F16F 7/09

(54) **DÄMPFER INSBESONDERE FÜR BEWEGLICHE MÖBELTEILE**
DAMPER ESPECIALLY FOR MOVABLE PARTS OF PIECES OF FURNITURE
AMORTISSEUR EN PARTICULIER POUR DES PIECES DE MOBILIER MOBILES

(30) Priorität: 30.01.2003 AT 432003 U
(43) Veröffentlichungstag der Anmeldung: 26.10.2005
(73) Patentinhaber: Julius Blum Gesellschaft m.b.H., 6973 Höchst (AT)
(72) Erfinder: GASSNER, Daniel, A-6800 Feldkirch (AT); KRAMMER, Bernhard, A-6973 Höchst (AT)
(74) Vertreter: Torggler, Paul Norbert
(86) Internationale Anmeldenummer: PCT/AT2003/000367
(87) Internationale Veröffentlichungsnummer: WO 2004/067988

(56) Entgegenhaltungen:
- EP-A- 0 485 647
- EP-A- 0 812 999
- EP-A- 1 236 925
- DE-A- 4 014 166
- DE-C- 10 127 429
- DE-U- 1 697 497
- US-A- 2 229 750
- US-A- 3 856 285
- US-A- 5 133 435
- US-A1- 2002 088 677

## Beschreibung

Die Erfindung bezieht sich auf einen Dämpfer insbesondere für bewegliche Möbelteile mit einem Zylinder und einem darin verschiebbaren Kolben, bei dem der Kolben zwei- oder mehrteilig ausgeführt ist, wobei ein erster Kolbenteil aus gummielastischem Material besteht, das beim Dämpfungshub an die Zylinderwand gedrückt wird, und wobei ein zweiter Kolbenteil aus einem gegenüber dem gummielastischem Material steiferen, insbesondere starren Material besteht.

Aufgabe der Erfindung ist es, das Bremsverhalten des Kolbens eines derartigen Dämpfers zu verbessern und seinen Verschleiß zu vermindern.

Die erfindungsgemäße Aufgabe wird durch die Merkmale von Anspruch 1 gelöst.

Ein Ausführungsbeispiel der Erfindung sieht vor, dass der erste Kolbenteil in einer stirnseitigen Vertiefung des zweiten Kolbenteiles aufgenommen ist.

Bei einem weiteren Ausführungsbeispiel der Erfindung ist vorgesehen, dass der erste Kolbenteil in dem den zweiten Kolbenteil benachbarten Bereich eine Ringnut aufweist.

Ein weiteres Ausführungsbeispiel der Erfindung sieht vor, dass der zweite Kolbenteil den Mantel des ersten Kolbenteil bandartig umgibt, wobei vorzugsweise der zweite Kolbenteil als Netz ausgeführt ist, das den ersten Kolbenteil umgibt.

Ein weiteres bevorzugtes Ausführungsbeispiel der Erfindung sieht vor, dass der erste Kolbenteil über seine Länge mindestens zwei, vorzugsweise mehrere Abschnitte unterschiedlicher Härte aufweist.

Ein weiteres bevorzugtes Ausführungsbeispiel der Erfindung sieht vor, dass der Kolben als Vollkörper aus einem Material mit gummielastischen Eigenschaften gefertigt ist und unter Druck gestaucht wird, wobei er sich derart deformiert, dass ein Reibschluss zwischen dem Kolben und der Zylinderwand entsteht.

Nachfolgend werden verschiedene Ausführungsbeispiele der Erfindung anhand der Figuren der beiliegenden Zeichnungen beschrieben. Es zeigen:
- Fig. 1: eine Seitenansicht eines erfindungsgemäßen Dämpfers,
- Fig. 2: einen Schnitt nach der Linie A-A der Fig. 1,
- Fig. 3: den Ausschnitt A der Fig. 2,
- Fig. 4: eine Seitenansicht eines erfindungsgemäßen Dämpfers nach erfolgter Dämpfung,
- Fig. 5: einen Schnitt nach der Linie B-B der Fig. 4,
- Fig. 6: den Ausschnitt A der Fig. 5,
- Fig. 7: einen Schnitt nach der Linie A-A der Fig. 1, wobei ein weiteres Ausführungsbeispiel eines Kolbens gezeigt ist,
- Fig. 8: den Ausschnitt A der Fig. 7,
- Fig. 9: einen Schnitt nach der Linie A-A der Fig. 1, wobei ein weiteres Ausführungsbeispiel eines Kolbens gezeigt ist,
- Fig. 10: den Ausschnitt A der Fig. 9,
- Fig. 11: einen Schnitt nach der Linie A-A der Fig. 1, wobei ein weiteres Ausführungsbeispiel eines Kolbens gezeigt ist,
- Fig. 12: den Ausschnitt A der Fig. 11,
- Fig.13: einen Schnitt nach der Linie A-A der Fig. 1, wobei ein weiteres Ausführungsbeispiel eines Kolbens gezeigt ist,
- Fig. 14: den Ausschnitt A der Fig. 13,
- Fig.15: einen Schnitt nach der Linie A-A der Fig. 1, wobei ein weiteres Ausführungsbeispiel eines Kolbens gezeigt ist,
- Fig. 16: den Ausschnitt A der Fig. 15,
- Fig. 17: einen Längsschnitt durch einen Zylinder und einen Kolben nach einer nicht erfindungsgemäßen Ausführungsform, wobei der Kolben in der Bereitschaftsstellung gezeigt ist,
- Fig. 18: einen Längsschnitt durch einen Zylinder und einen Kolben nach einer nicht erfindungsgemäßen Ausführungsform, wobei sich der Kolben in der Dämpfstellung befindet,
- Fig. 19: einen schematisch gehaltenen Schnitt durch einen Dämpfer nach einer nicht erfindungsgemäßen Ausführungsform, wobei der Kolben in der Bereitschaftsstellung gezeigt ist,
- Fig. 20: einen schematisch gehaltenen Schnitt durch den Dämpfer gem. Fig. 19, wobei der Kolben während der Dämpfung gezeigt ist,
- Fig. 21: einen schematisch gehaltenen Schnitt durch den Dämpfer nach Fig. 19, wobei der Kolben am Ende des Dämpfungsweges nach erfolgter Dämpfung gezeigt ist,
- Fig. 22-24: analoge Ansichten zu den Fig. 19 bis 21 bei einem Kolben nach einer erfindungsgemäßen Ausführungsform,
- Fig. 25: ein Schaubild eines Kolbens nach einer erfindungsgemäßen Ausführungsform in der Bereitschaftsstellung und
- Fig. 26: ein Schaubild des Kolbens nach Figur 25 während des Dämpfungsvorganges.

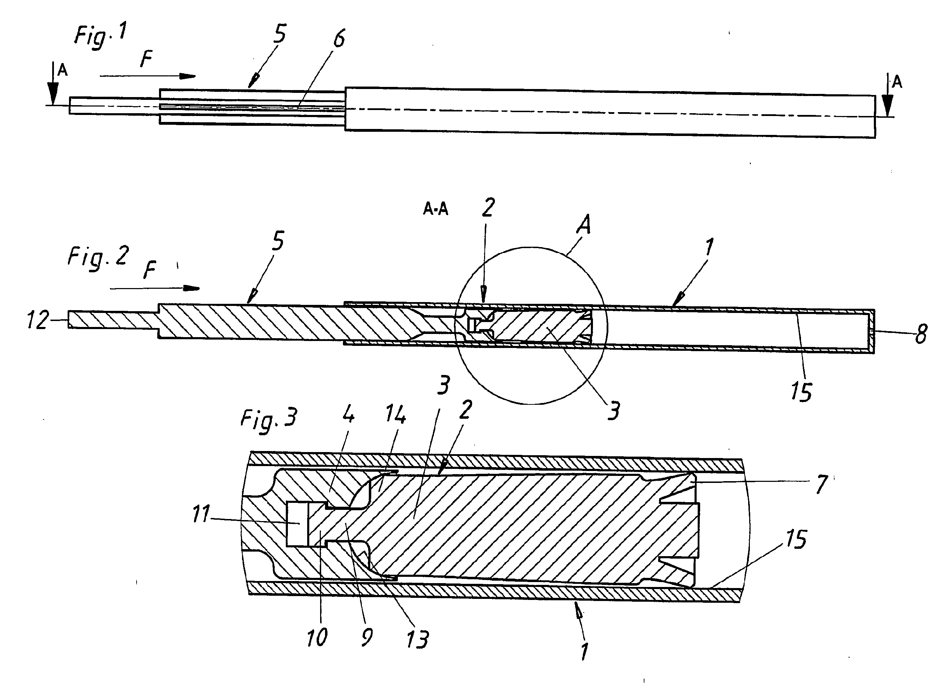

Nachfolgend werden die Ausführungsbeispiele nach den Fig. 1 bis 18 beschrieben:

Der erfindungsgemäße Dämpfer besteht in herkömmlicher Weise aus einem Zylinder 1, in dem ein Kolben 2 linear verfahrbar ist. Der Kolben 2 besteht in den Ausführungsbeispielen nach den Fig. 1 bis 16 aus einem ersten Kolbenteil 3 aus einem gummielastischen Material und einem zweiten Kolbenteil 4 aus einem härteren Material als der erste Kolbenteil 3. Der zweite Kolbenteil 4 kann ebenfalls aus einem Kunststoff, aber auch aus einer Spritzgusslegierung od. dgl. bestehen. In den gezeigten Ausführungsbeispielen ist der zweite Kolbenteil 4 einstückig mit einer Kolbenstange 5 ausgebildet. Die Kolbenstange 5 weist Rippen 6 auf, die die Führung der Kolbenstange 5 im Zylinder 1 verbessern und dabei die Reibung zwischen der Kolbenstange 5 und dem Zylinder 1 niedrig halten. Der erste Kolbenteil 3 weist an seinem vom zweiten Kolbenteil 4 entfernten Ende eine Lippe 7 auf. Die Stirnwand 1' des Zylinders 1 ist mit einer Öffnung 8 versehen, die den Austritt eines Dämpfungsfluids, in diesem Falle Luft, während der Dämpfung ermöglicht.

Der erste Kolbenteil 3 weist einen zapfenartigen Ansatz 9 auf, in dem er im zweiten Kolbenteil 4 verankert ist. Der Zapfen 9 ist mit einem verbreiteten Ring 10 versehen, der in einer kammerförmigen Aussparung 11 im zweiten Kolbenteil 4 aufgenommen ist. Der Zapfen 9 ist mit seinem verbreiteten Teil 10 in der Aussparung 11 axial verschiebbar. Der erste Kolbenteil 3 und die Dichtlippe 7 sind vorzugsweise aus einem gummielastischem Material, beispielsweise aus Flüssigsilikonkautschuk (LSR), thermoplastischen Elastomeren (TPE) oder Si-Kautschuk gefertigt. Der Härtebereich des ersten Kolbenteils 3 liegt vorzugsweise zwischen 40 a und 85 a Shore.

Der zweite Kolbenteil 4 weist stirnseitig eine dreidimensional gekrümmte Vertiefung 13 auf, die mindestens annähernd in der Form einer Kugelkalotte ausgeführt ist. Der erste Kolbenteil 3 ist mit seinem Ende in dieser Vertiefung 13 aufgenommen. Das Ende 14 des ersten Kolbenteils 3 kann sowohl zylindrisch als auch kegelstumpfförmig ausgeführt sein.

In der Bereitschaftsstellung, d.h. wenn keine Kraft auf die Kolbenstange 5 wirkt und somit der zweite Kolbenteil 4 nicht gegen den ersten Kolbenteil 3 gedrückt wird, füllt das Ende 14 des ersten Kolbenteils 3 die Vertiefung 13 nicht aus. Wie beispielsweise aus der Fig. 3 ersichtlich, ragt das Ende 14 des Kolbenteils 3 über ca. den halben Radius der Vertiefung 13 in die Vertiefung 13 hinein.

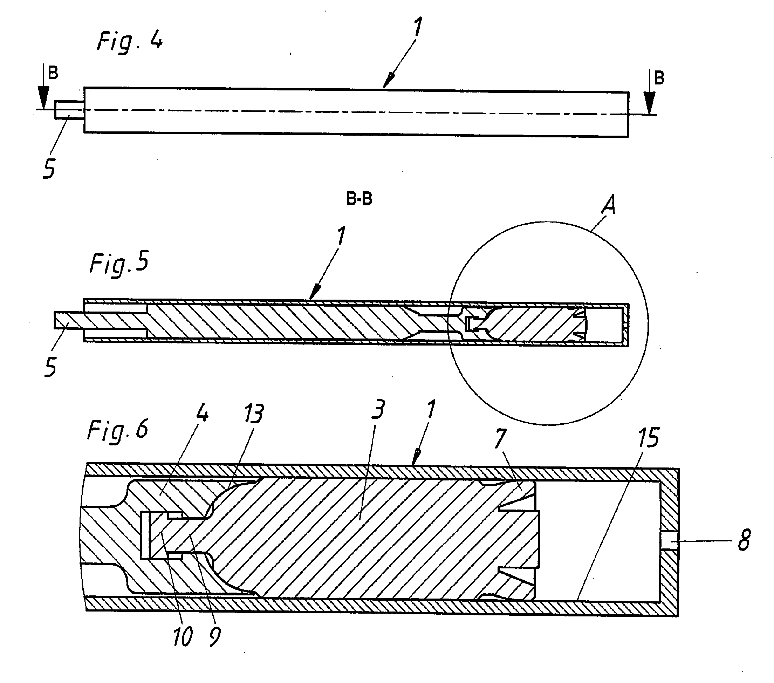

Trifft eine Kraft auf das Ende 12 der Kolbenstange 5, werden die Kolbenstange 5 und der Kolben 2 in der Richtung des Pfeils F bewegt. Durch den Widerstand des Dämpfungsmediums, beispielsweise Luft, wird der erste Kolbenteil 3 während des Dämpfungsvorganges wie in den Fig. 5 und 6 gestaucht und dadurch radial erweitert, wodurch es zu einem Reibschluss zwischen dem Kolbenteil 3 und der Zylinderwand 15 kommt. Der Widerstand des Dämpfungsmediums wird durch die Dichtlippe 7, die vom Anfang an der Kolbenbewegung an der Zylinderwand 15 anliegt, erhöht.

Während dieser Dämpfungsbewegung wird das Ende 14 des ersten Kolbenteils 3 in die Aussparung 13 hineingedrückt, bis sie, wie in den Fig. 5 und 6 gezeigt, mindestens annähernd zur Gänze in der Vertiefung aufgenommen ist. Dadurch, dass das Ende 14 des ersten Kolbenteils 3 während der Dämpfung in der Vertiefung 13 aufgenommen wird, wird der erste Kolbenteil 3 verformt und die Reibungskräfte zwischen dem ersten Kolbenteil 3 und der Zylinderwand 15 werden über die ganze Länge des Kolbenteils 3 verteilt. Es werden also Spitzenkräfte im Bereich der Abstützung des ersten Kolbenteiles 3 am zweiten Kolbenteil 4 verhindert. Der erste Kolbenteil 3 ist vorteilhaft konisch von der Dichtlippe 7 zum Ende 14 hin verkleinert, was zusätzlich zu einer Verteilung der Reibungskräfte beiträgt.

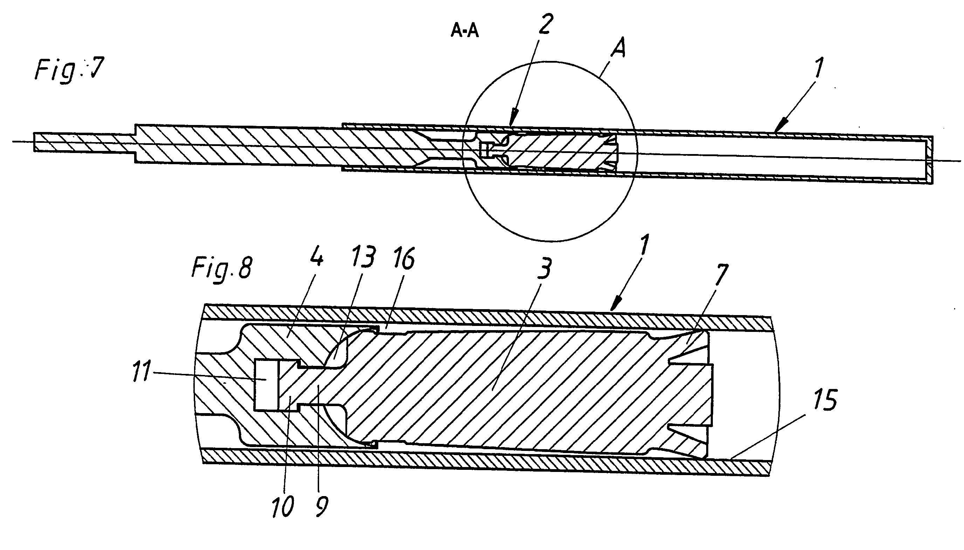

Im Ausführungsbeispiel nach den Fig. 7 und 8 ist der erste Kolbenteil 3 nahe seinem Ende 14 mit einer Ringnut 16 versehen. Die Ringnut 16 trägt zur weiteren Entlastung der Reibkräfte im hinteren Bereich des ersten Kolbenteils 3 bei. Wesentlich ist, dass während der gesamten Dämpfung ein Teil des zweiten Kolbenteils 4, der der härtere Kolbenteil ist, sich in radialer Richtung gesehen zwischen dem Ende 14 des weicheren ersten Kolbenteils 3 und der Zylinderwand 15 befindet. Der weichere Kolbenteil 3 kann somit nicht über seine gesamte Länge an die Zylinderwand 15 gedrückt werden.

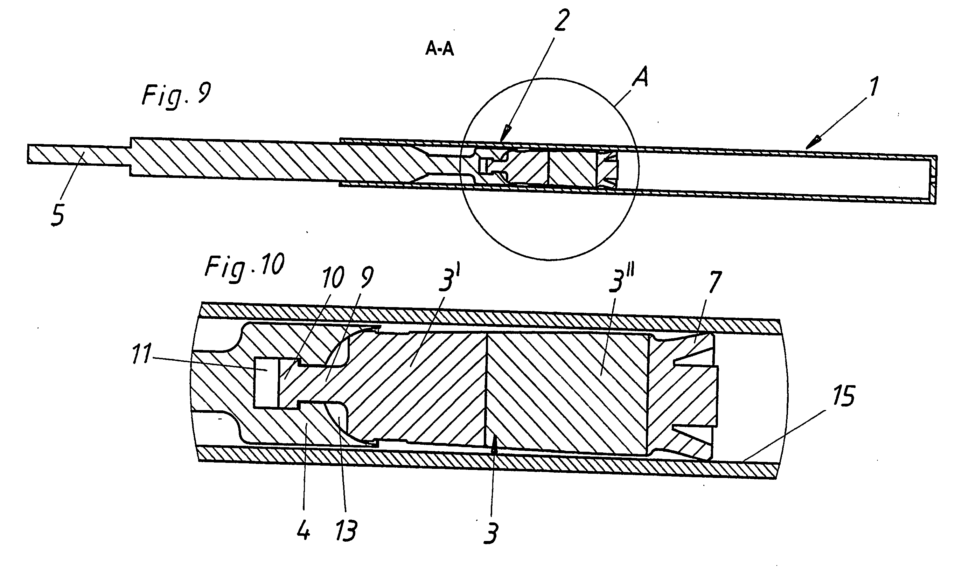

Im Ausführungsbeispiel nach den Fig. 9 und 10 weist der erste Kolbenteil 3 zwei Abschnitte 3', 3" unterschiedlicher Härte auf. Der der Lippe 7 näher liegende Abschnitt 3" lässt früher aus, wenn er aus einem weicheren Material gefertigt wird. So soll erreicht werden, dass die ganze Oberfläche des Kolbenteils 3 bereits am Anfang des Bremsvorganges an der Zylinderwand 15 anliegt. Dies bewirkt eine gleichmäßigere Kraftverteilung über den Kolbenteil 3. Kleinere Kraftspitzen während des Bremsvorganges und weniger Verschleiß sind die Folge.

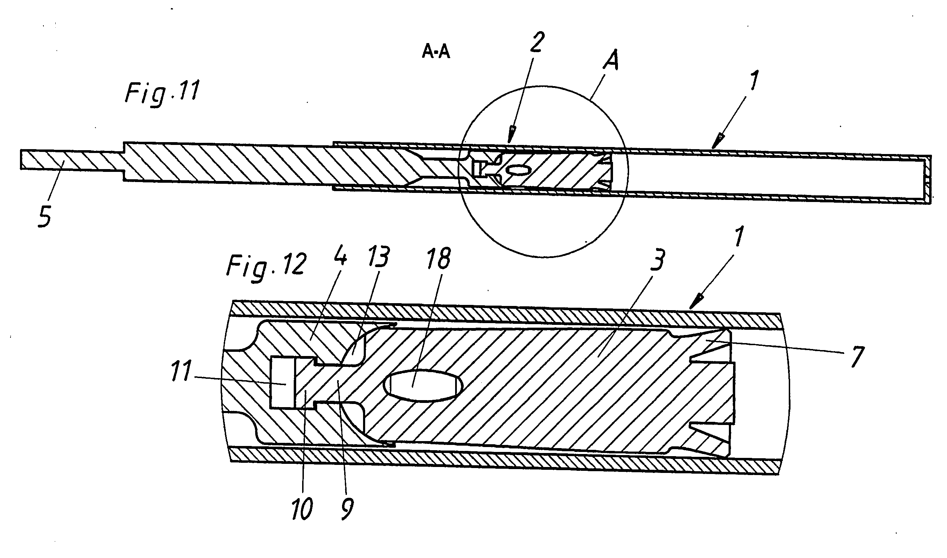

Im Ausführungsbeispiel nach den Fig. 11 und 12 ist der Kolbenteil 3 mit einem Hohlraum 18 versehen, der sich in seinem hinteren, d.h. dem Kolbenteil 4 zugewandten Bereich befindet. Der Hohlraum 18 lässt eine gezielte Beeinflussung der Flächenpressung, also der Reibkraftverteilung über den Kolbenteil 3 zu. Dort, wo sich der Hohlraum 18 befindet, wird die Flächenpressung herabgesetzt. Soll beispielsweise durch ein härteres Elastomer als Material für den Kolbenteil 3 der Verschleiß minimiert werden, so muss der Ringspalt zwischen dem Kolbenteil 3 und der Zylinderwand 15 sehr klein gewählt werden, da härtere Materialien beim Dämpfvorgang später wirksam werden. Wenn kein Hohlraum 18 vorgesehen ist, kann der kleine Ringspalt zwischen dem Kolbenteil 3 und der Zylinderwand 15 am Ende des Brems- bzw. Dämpfweges zu einem abrupten Bremsen führen. Die Folge wäre ein unschöner Bremsverlauf.

Anstatt eines Hohlraumes 18 wäre auch eine Füllung mit einem weicheren Material vorsehbar.

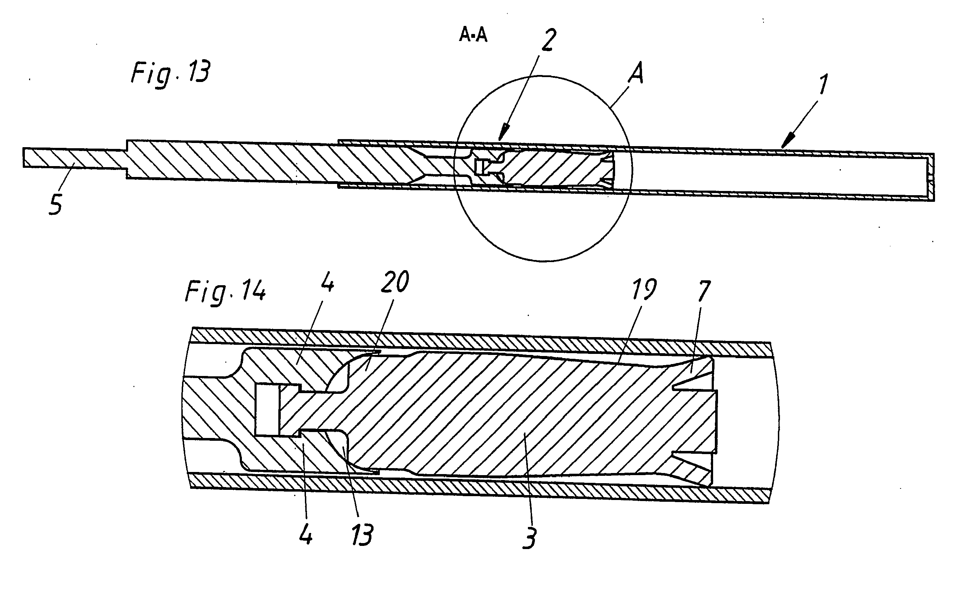

Im Ausführungsbeispiel nach den Fig. 13 und 14 ist der erste Kolbenteil 3 mit einem sich zur Dichtlippe 7 hin verjüngenden konischen Mantelbereich 19 versehen. An seinem dem zweiten Kolbenteil 4 zugewandten Ende weist der erste Kolbenteil 3 eine zylindrische Abstufung 20 auf. Durch größere oder kleinere Konizität des Bereiches 19 lässt sich die Flächenpressung über die Länge des Kolbenteils 3 gezielt verkleinern oder vergrößern. Der abgestufte Abschnitt 20 verhindert eine zu hohe Flächenpressung im Anschlussbereich an den zweiten Kolbenteil 4.

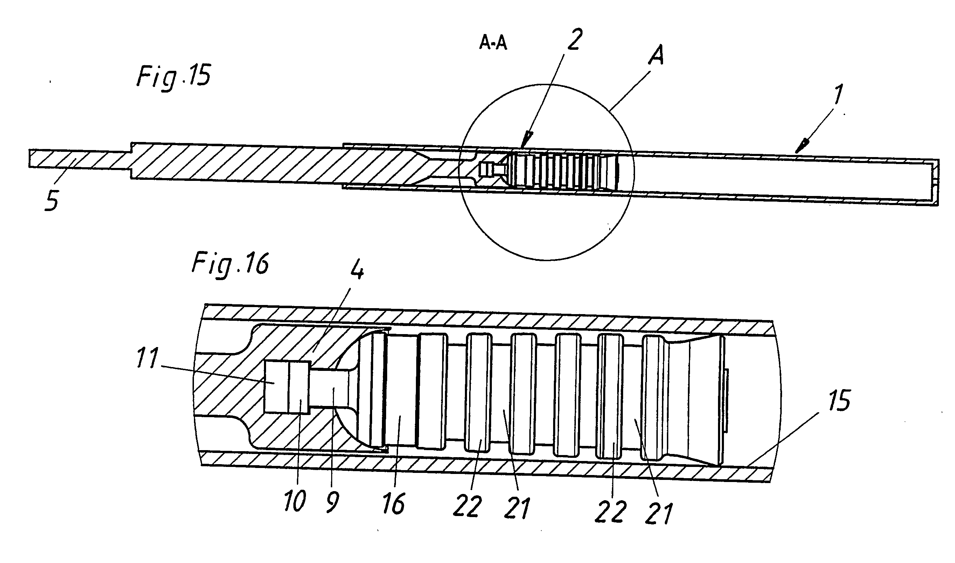

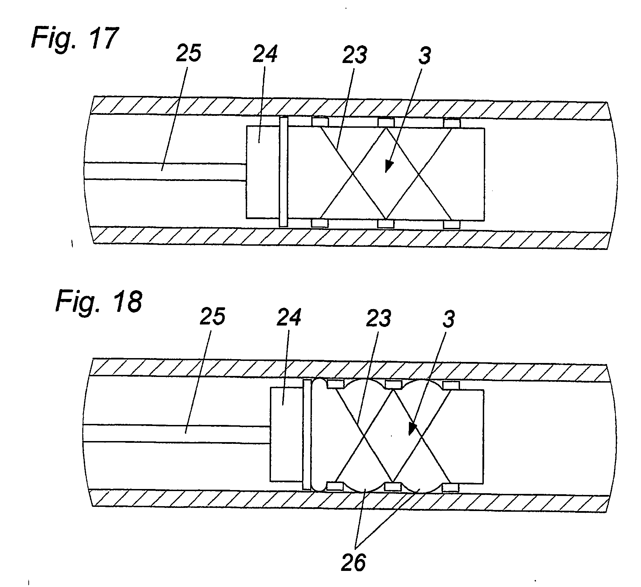

Im Ausführungsbeispiel nach den Fig. 15 und 16 weist der erste Kolbenteil 3 mehrere Ringnuten 21 und mehrere Ringstege 22 auf, die sich über die gesamte Länge des Kolbenteiles 3 abwechseln. Die Durchmesser der Ringstege 22 nehmen dabei von der Dichtlippe 7 zum zweiten Kolbenteil 4 ab. Im Ausführungsbeispiel nach den Fig. 17 und 18 ist der Kolbenteil 3 mit einem Netz 23 umgeben. Das Netz 23 ist aus einem härteren Material als der Kolbenteil 3 und bildet den zweiten Kolbenteil. Der erste Kolbenteil 3 stützt sich unmittelbar an einer Abstützplatte 24 ab, die mit einer Kolbenstange 25 verbunde ist. Während des Dämpfungsvorganges werden, wie aus der Fig. 18 ersichtlich, Ausbuchtungen 26 des Kolbenteils 3 an die Zylinderwand 15 gedrückt.

Bei allen Ausführungen wird eine gleichmäßigere Flächenpressung des Kolbenteils 3 an der Zylinderwand 15 erzielt. Dies bewirkt weniger Verschleiß und ein besseres Bremsverhalten, d.h. das Bremsverhalten ist weniger abrupt.

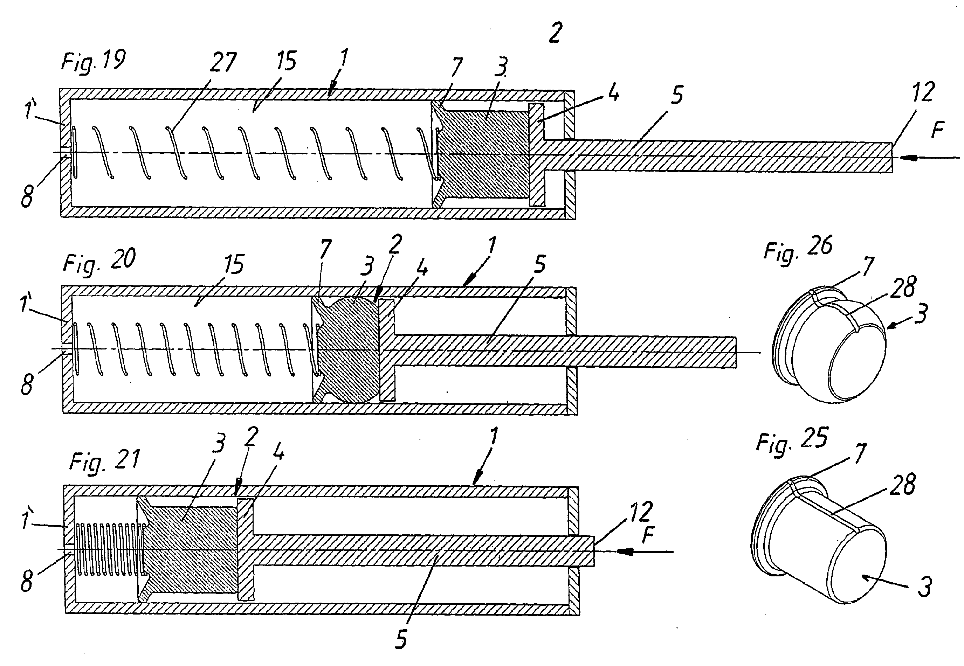

Im Ausführungsbeispiel nach den Fig. 19 bis 24 liegt der zylindrische Kolbenteil 3 an einem Kolbenteil 4 an, der als Stützplatte ausgeführt ist. Im Zylinder 1 befindet sich eine Druckfeder 27, die sich einerseits an der Stirnwand 1' des Zylinders 1 und andererseits an der Vorderseite des Kolbens 2 abstützt. Der Kolbenteil 4 ist mit einer Kolbenstange 5 verbunden. Der Kolbenteil 3 ist vorne mit einer Dichtlippe 7 versehen, die an der Zylinderwand 15 anliegt. Der Begriff "vorne" ist in der Bewegungsrichtung des Kolbens 2 beim Dämpfvorgang zu verstehen.

Die Stirnwand 1' des Zylinders 1 weist wiederum eine Öffnung 8 auf, die den Austritt des Dämpfungsfluids, in diesem Falle der Luft, ermöglicht.

Beim Dämpfungsvorgang wirkt eine Kraft auf das Ende 12 der Kolbenstange 5 und der Kolben 2 wird in der Richtung des Pfeiles F bewegt.

Durch den Widerstand des Dämpfungsmediums, beispielsweise der Luft, wird der Kolbenteil 3 des Kolbens 2 während des Dämpfungsvorganges, wie in der Fig. 20 gezeigt, gestaucht und dadurch radial erweitert, wodurch es zu einem Reibschluss zwischen dem Kolbenteil 3 und der Zylinderwand 15 kommt.

Am Ende des Dämpfungsweges dehnt sich der Kolbenteil 3 durch die ihm eigene Elastizität in axialer Richtung aus, wobei die Druckfeder 27 weiter zusammengedrückt wird.

Da durch diese axiale Ausdehnung des Kolbenteiles 3 der Reibschluss zwischen dem Kolbenteil 3 und der Zylinderwand 15 aufgehoben wird, kann die Druckfeder 27 den Kolben 2 zurück in die Bereitschaftsstellung bewegen.

Im Ausführungsbeispiel nach den Fig. 19 bis 21 bilden der Kolbenteil 3 und die Dichtlippe 7 einen monolithischen Körper. Der Kolbenteil 3 und die Dichtlippe 7 sind dabei aus einem gummielastischen Material, beispielsweise aus Flüssigsiliconkautschuk (LSR), thermoplastischen Elastomeren (TPE) oder Si-Kautschuk gefertigt. Der Härtebereich des Kolbens liegt vorzugsweise zwischen 40A und 85A Shore.

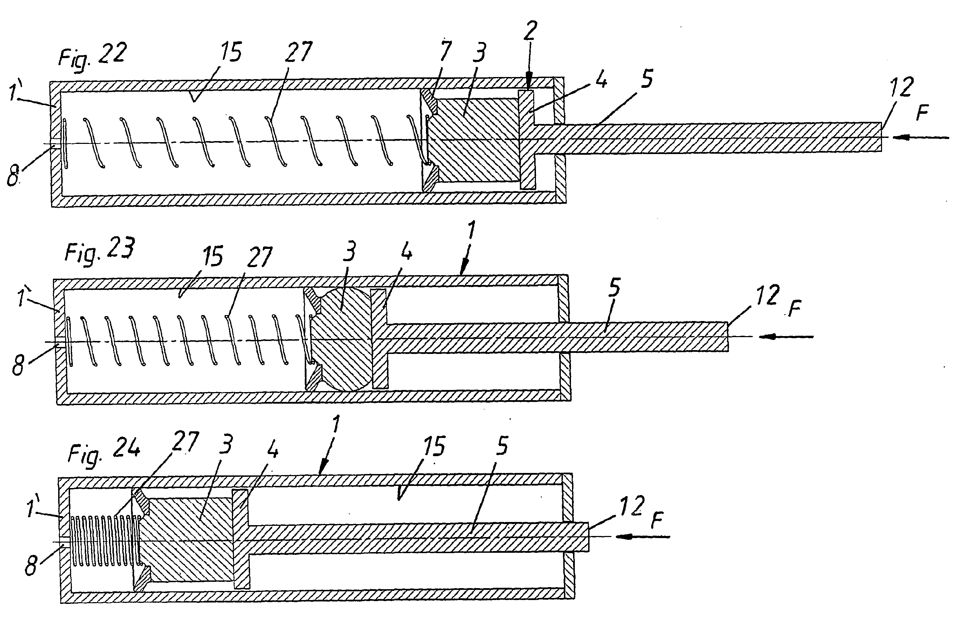

Im Ausführungsbeispiel nach den Fig. 22 bis 24 bestehen der Kolbenteil 3 und die Dichtlippe 7 aus unterschiedlichen Materialien. Die Dichtlippe 7 ist jedoch mit dem Kolbenteil 3 verbunden, beispielsweise verklebt oder verschweißt, sodass der Kolbenteil 3 und die Dichtlippe 7 funktionell als einstückig zu betrachten sind. Der Vorteil dieser Ausführung ist darin zu sehen, dass der Kolbenteil 3 und die Dichtlippe 7 unterschiedliche elastische Eigenschaften aufweisen können.

Wie aus den Fig. 25 und 26 ersichtlich, kann der Kolbenteil 3 am Mantel mit einer Nut 28 versehen sein, die beim Dämpfungsvorgang den Durchfluss des Dämpfungsfluids innerhalb des Zylinders 1 von der einen Seite des Kolbens 2 zur anderen Seite des Kolbens 2 ermöglicht.

Der erfindungsgemäße Dämpfer ist beispielsweise bei Schubladen, Möbeltüren oder Klappen einsetzbar. Er kann vorteilhaft mit einer Einzugs- bzw. Schließvorrichtung wie im deutschen Gebrauchsmuster DE 202 18 067 U beschrieben kombiniert werden.

## Patentansprüche

1. Dämpfer für bewegliche Möbelteile mit einem Zylinder (1) und einem darin verschiebbaren Kolben (2), bei dem der Kolben (2) zwei- oder mehrteilig ausgeführt ist, wobei ein erster Kolbenteil (3) aus gummielastischem Material besteht, das beim Dämpfungshub an die Zylinderwand (15) gedrückt wird, und wobei ein zweiter Kolbenteil (4, 23) aus einem gegenüber dem gummielastischem Material steiferen, insbesondere starren Material besteht, wobei der zweite Kolbenteil (4, 23) - in radialer Richtung gesehen - zwischen einem Bereich des ersten Kolbenteiles (3) und der Zylinderwand (15) liegt, **dadurch gekennzeichnet, dass** der erste Kolbenteil (3) in einer stirnseitigen Vertiefung (13) des zweiten Kolbenteiles (4) aufgenommen ist, wobei die Vertiefung (13) zumindest annähernd in der Form einer Kugelkalotte ausgeführt ist.

2. Dämpfer nach Anspruch 1, **dadurch gekennzeichnet, dass** der zweite Kolbenteil (4) aufgrund der Form der Kugelkalotte ein sich verjüngendes Ende aufweist, das im Bereich der Zylinderwand (15) den ersten Kolbenteil (3) an dessen Mantelfläche umgreift.

3. Dämpfer nach Anspruch 1 oder 2, **dadurch gekennzeichnet, dass** der ersten Kolbenteil (3) im drucklosen Zustand die Vertiefung (13) nur teilweise ausfüllt und während der Dämpfung zumindest annähernd zur Gänze.

4. Dämpfer nach einem der Ansprüche 1 bis 3, **dadurch gekennzeichnet, dass** sich der zweite Kolbenteil (4) zwischen dem ersten Kolbenteil (3) und einer Kolbenstange (5) befindet, die als Stößel dient.

5. Dämpfer nach mindestens einem der Ansprüche 1 bis 4, **dadurch gekennzeichnet, dass** der Mantel des ersten Kolbenteiles (3) mindestens einen Konus beschreibt.

6. Dämpfer nach Anspruch 5, **dadurch gekennzeichnet, dass** der Konus sich zum zweiten Kolbenteil (4) hin verjüngt.

7. Dämpfer nach Anspruch 5, **dadurch gekennzeichnet, dass** sich der Konus zum in Bezug auf den zweiten Kolbenteil (4) distalen Ende des ersten Kolbenteils (3) verjüngt.

8. Dämpfer nach einem der Ansprüche 1 bis 7, **dadurch gekennzeichnet, dass** der ersten Kolbenteil (3) an seinem dem zweiten Kolbenteil (4) nahen Ende abgestuft ausgeführt ist.

9. Dämpfer nach einem der Ansprüche 1 bis 8, **dadurch gekennzeichnet, dass** der erste Kolbenteil (3) an seinem dem zweiten Kolbenteil (4) nahen Ende mit einer Ringnut (16) versehen ist.

10. Dämpfer nach einem der Ansprüche 1 bis 9, **dadurch gekennzeichnet, dass** der erste Kolbenteil (3) mit mehreren über seine Länge verteilten Ringnuten (21) versehen ist, zwischen denen sich Ringstege (22) befinden.

11. Dämpfer nach Anspruch 10, **dadurch gekennzeichnet, dass** die Durchmesser der Ringstege (22) zum zweiten Kolbenteil hin abnehmen.

12. Dämpfer nach einem der Ansprüche 1 bis 11, **dadurch gekennzeichnet, dass** der erste Kolbenteil (3) einen zapfenartigen Ansatz (9) aufweist, mit dem er im zweiten Kolbenteil (4) verankert ist.

13. Dämpfer nach Anspruch 12, **dadurch gekennzeichnet, dass** der zapfenartige Ansatz (9) im zweiten Kolbenteil (4) axial verschiebbar ist.

14. Dämpfer nach einem der Ansprüche 1 bis 13, **dadurch gekennzeichnet, dass** der erste Kolbenteil (3) in dem den zweiten Kolbenteil (4) benachbarten Bereich einen Hohlraum (18) aufweist, der sich über weniger als die Hälfte der Länge des ersten Kolbenteils (3) erstreckt.

15. Dämpfer nach einem der Ansprüche 1 bis 14, **dadurch gekennzeichnet, dass** der erste Kolbenteil (3) über seine Länge mindestens zwei, vorzugsweise mehrere Abschnitte (3', 3") unterschiedlicher Härte aufweist.

16. Dämpfer nach einem der Ansprüche 1 bis 15 für bewegliche Möbelteile, mit einem Zylinder, der ein Dämpfungsfluid enthält und in dem ein Kolben mit einem Kolbenteil, der beim Dämpfungsvorgang radial nach außen gedrückt wird und an der Zylinderwand reibt, linear verfahrbar ist, **dadurch gekennzeichnet, dass** der Kolbenteil (3) als Vollkörper aus einem Material mit gummielastischen Eigenschaften gefertigt ist und unter Druck gestaucht wird, wobei er sich derart deformiert, dass ein Reibschluss zwischen dem Kolbenteil (3) und der Zylinderwand (15) entsteht.

17. Dämpfer nach Anspruch 16, **dadurch gekennzeichnet, dass** der Kolbenteil (3) aus einem Elastomer gefertigt ist.

18. Dämpfer nach Anspruch 17, **dadurch gekennzeichnet, dass** der Kolbenteil (3) aus einem thermoplastischen Elastomer bzw. TPE gefertigt ist.

19. Dämpfer nach Anspruch 17, **dadurch gekennzeichnet, dass** der Kolbenteil (3) aus Flüssigsiliconkautschuk bzw. LSR gefertigt ist.

20. Dämpfer nach Anspruch 16, **dadurch gekennzeichnet, dass** der Kolbenteil (3) aus einem Si-Kautschuk gefertigt ist.

21. Dämpfer nach einem der Ansprüche 1 bis 20, **dadurch gekennzeichnet, dass** die Härte des Kolbenteils (3) zwischen 40A und 85A Shore liegt.

22. Dämpfer nach einem der Ansprüche 1 bis 21, **dadurch gekennzeichnet, dass** der erste Kolbenteil (3) mit einer Dichtlippe (7) versehen ist.

23. Dämpfer nach Anspruch 22, **dadurch gekennzeichnet, dass** die Dichtlippe (7) an der Zylinderwand (15) anliegt.

24. Dämpfer nach Anspruch 22 oder 23, **dadurch gekennzeichnet, dass** der Kolbenteil (3) und die Dichtlippe (7) gemeinsam einen monolithischen Körper bilden.

25. Dämpfer nach Anspruch 22 oder 23, **dadurch gekennzeichnet, dass** der Kolbenteil (3) und die Dichtlippe (7) aus Kunststoffen unterschiedlicher Härte gefertigt sind.

26. Dämpfer nach Anspruch 25, **dadurch gekennzeichnet, dass** der Kolbenteil (3) und die Dichtlippe (7) miteinander verschweißt sind.

27. Dämpfer nach Anspruch 25, **dadurch gekennzeichnet, dass** der Kolbenteil (3) und die Dichtlippe (6) miteinander verklebt sind.

28. Dämpfer nach einem der Ansprüche 1 bis 27, **dadurch gekennzeichnet, dass** der Kolbenteil (3) an seinem Mantel mit einer in axialer Richtung verlaufenden Nut (11) versehen ist.

29. Dämpfer nach einem der Ansprüche 1 bis 28, **dadurch gekennzeichnet, dass** der erste Kolbenteil (3) im drucklosen Zustand zylinderförmig ausgeführt ist und unter Druck der Mantel des Kolbenteils (3) eine bombierte Form einnimmt.

30. Dämpfer nach einem der Ansprüche 1 bis 29, **dadurch gekennzeichnet, dass** im Zylinder (1) eine Druckfeder (27) angeordnet ist, die sich einerseits an einer Stirnwand (1') des Zylinders (1) und andererseits am Kolbenteil (3) abstützt, wobei die Ausdehnungskraft des elastischen Kolbenteils (3) größer ist als die Federkraft der Druckfeder (27).

## Claims

1. Damper for movable furniture parts with a cylinder (1) and a piston (2) movable therein, said piston (2) comprises two or more parts, wherein a first piston part (3) consists of rubber-elastic material which is forced against the cylinder wall (15) during the damping stroke, and wherein a second piston part (4, 23) consists of a material which is stiffer, in particular rigid, in comparison to the rubber-elastic material, wherein the second piston part (4, 23) - seen in radial direction - lies between an area of the first piston part (3) and the cylinder wall (15), **characterised in that** the first piston part (3) is taken up in a frontal recess (13) of the second piston part (4), wherein the recess (13) has at least approximately the form of a spherical cap.

2. Damper according to claim 1, **characterised in that** the second piston part (4) has - due to the form of the spherical cap - a narrowing end which encompasses the first piston part (3) at an outer surface thereof.

3. Damper according to claim 1 or 2, **characterised in that** the first piston part (3) only partly fills the recess (13) in an unpressurised condition and at least approximately completely fills the recess (13) during a damping operation.

4. Damper according to one of the claims 1 to 3, **characterised in that** the second piston part (4) is located between the first piston part (3) and a piston rod (5) which serves as ram.

5. Damper according to one of the claims 1 to 4, **characterised in that** the first piston part (3) has a cone-shaped mantle.

6. Damper according to claim 5, **characterised in that** the cone-shaped mantle is tapered towards the second piston part (4).

7. Damper according to claim 5, **characterised in that** the cone-shaped mantle is tapered towards a distal end of the first piston part (3) relative to the second piston part (4).

8. Damper according to one of the claims 1 to 7, **characterised in that** the first piston part (3) has a base end closest to the second piston part (4), said base end having a graduated shape.

9. Damper according to one of the claims 1 to 8, **characterised in that** the first piston part (3) has a base end closest to the second piston part (4), said base end having a snap ring groove (16).

10. Damper according to one of the claims 1 to 9, **characterised in that** the first piston part (3) has a plurality of snap ring grooves (21) spaced apart along its length, wherein piston lands (22) are arranged between the snap ring grooves (21).

11. Damper according to claim 10, **characterised in that** the diameters of the piston lands (22) reduce towards the second piston part (4).

12. Damper according to one of the claims 1 to 11, **characterised in that** the first piston part (3) has a peg-type projection (9) for attaching the first piston part (3) to the second piston part (4).

13. Damper according to claim 12, **characterised in that** the peg-type projection (9) is axially displaceable within the second piston part (4).

14. Damper according to one of the claims 1 to 13, **characterised in that** the first piston part (3) has a cavity (18) in an area adjacent to the second piston part (4), said cavity (18) extends over less than half of an axial length of the first piston part (3).

15. Damper according to one the claims 1 to 14, **characterised in that** the first piston part (3) comprises at least two, preferably multiple, sections (3', 3") of different hardness.

16. Damper according to one of the claims 1 to 15 for movable furniture parts, with a cylinder containing a damping fluid and a piston linearly displaceable in the cylinder, said piston is being pressed radially outwards during a damping operation and slides with friction on the cylinder wall, **characterised in that** the piston part (3) is designed as a solid body of rubber-elastic material which is bulged under pressure and deformed such so as to provide a frictional contact between the piston part (3) and the cylinder wall (15).

17. Damper according to claim 16, **characterised in that** the piston part (3) is made from an elastomer.

18. Damper according to claim 17, **characterised in that** the piston part (3) is made from a thermoplastic elastomer or TPE, respectively.

19. Damper according to claim 17, **characterised in that** the piston part (3) is made from liquid silicon rubber or LSR, respectively.

20. Damper according to claim 16, **characterised in that** the piston part (3) is made from a silicon rubber.

21. Damper according to claim 20, **characterised in that** the hardness of the piston part (3) lies between 40A and 85A Shore.

22. Damper according to one of the claims 1 to 21, **characterised in that** the first piston part (3) comprises a sealing lip (7).

23. Damper according to claim 22, **characterised in that** the sealing lip (7) abuts against the cylinder wall (15).

24. Damper according to claim 22 or 23, **characterised in that** the first piston part (3) and the sealing lip (7) jointly form a monolithic body.

25. Damper according to claim 22 or 23, **characterised in that** the first piston part (3) and the sealing lip (7) are made from plastics with different hardnesses.

26. Damper according to claim 25, **characterised in that** the first piston part (3) and the sealing lip (7) are welded together.

27. Damper according to claim 25, **characterised in that** the first piston part (3) and the sealing lip (7) are glued together,

28. Damper according to one of the claims 1 to 27, **characterised in that** at least a piston part (3) is provided with a groove (11) running in axial direction on its mantle.

29. Damper according to one of the claims 1 to 28, **characterised in that** the first piston part (3) has a cylindrical shape in an unpressurised condition, wherein the mantle of said piston part (3) has a domed shape in a pressurised condition during damping.

30. Damper according to one of the claims 1 to 29, **characterised in that** a compression spring (27) is arranged in the cylinder (1), said spring having a first end abutting against a front wall (1') of the cylinder (1) and having a second end abutting against the piston part (3), wherein the expansion force of the elastic piston part (3) is greater than the spring force of the compression spring (27).

## Revendications

1. Amortisseur pour des pièces de mobilier mobiles avec un cylindre (1) et un piston (2) coulissant dedans, dans lequel le piston (2) est réalisé en deux ou plusieurs parties, une première partie de piston (3) se composant de matériau ayant l'élasticité du caoutchouc qui est pressé lors de la course d'amortissement sur la paroi de cylindre (15), et une seconde partie de piston (4, 23) se composant d'un matériau plus rigide par rapport au matériau ayant l'élasticité du caoutchouc, en particulier indéformable, la seconde partie de piston (4, 23), vu dans le sens radial, se trouvant entre une zone de la première partie de piston (3) et la paroi de cylindre (15), **caractérisé en ce que** la première partie de piston (3) est reçue dans un creux (13) côté frontal de la seconde partie de piston (4), le creux (13) étant réalisé au moins approximativement sous la forme d'une calotte sphérique.

2. Amortisseur selon la revendication 1, **caractérisé en ce que** la seconde partie de piston (4) présente en raison de la forme de calotte sphérique une extrémité se rétrécissant qui entoure dans la zone de la paroi de cylindre (15) la première partie de piston (3) sur sa surface latérale.

3. Amortisseur selon la revendication 1 ou 2, **caractérisé en ce que** la première partie de piston (3) à l'état exempt de pression remplit uniquement partiellement le creux (13) et pendant l'amortissement au moins approximativement totalement.

4. Amortisseur selon l'une quelconque des revendications 1 à 3, **caractérisé en ce que** la seconde partie de piston (4) se trouve entre la première partie de piston (3) et une tige de piston (5) qui sert de poussoir.

5. Amortisseur selon au moins l'une quelconque des revendications 1 à 4, **caractérisé en ce que** la surface latérale de la première partie de piston (3) décrit au moins un cône.

6. Amortisseur selon la revendication 5, **caractérisé en ce que** le cône se rétrécit vers la seconde partie de piston (4).

7. Amortisseur selon la revendication 5, **caractérisé en ce que** le cône se rétrécit vers l'extrémité distale par rapport à la seconde partie de piston (4) de la première partie de piston (3).

8. Amortisseur selon l'une quelconque des revendications 1 à 7, **caractérisé en ce que** la première partie de piston (3) est réalisée étagée sur son extrémité proche de la seconde partie de piston (4).

9. Amortisseur selon l'une quelconque des revendications 1 à 8, **caractérisé en ce que** la première partie de piston (3) est pourvue sur son extrémité proche de la seconde partie de piston (4) d'une rainure annulaire (16).

10. Amortisseur selon l'une quelconque des revendications 1 à 9, **caractérisé en ce que** la première partie de piston (3) est pourvue de plusieurs rainures annulaires (21) réparties sur sa longueur, entre lesquelles se trouvent des listels (22).

11. Amortisseur selon la revendication 10, **caractérisé en ce que** les diamètres des listels (22) diminuent vers la seconde partie de piston.

12. Amortisseur selon l'une quelconque des revendications 1 à 11, **caractérisé en ce que** la première partie de piston (3) présente une saillie (9) de type tenon, avec laquelle elle est ancrée dans la seconde partie de piston (4).

13. Amortisseur selon la revendication 12, **caractérisé en ce que** la saillie (9) de type tenon est mobile axialement dans la seconde partie de piston (4).

14. Amortisseur selon l'une quelconque des revendications 1 à 13, **caractérisé en ce que** la première partie de piston (3) présente dans la zone contiguë à la seconde partie de piston (4) un espace creux (18) qui s'étend sur moins de la moitié de la longueur de la première partie de piston (3).

15. Amortisseur selon l'une quelconque des revendications 1 à 14, **caractérisé en ce que** la première partie de piston (3) présente sur sa longueur au moins deux, de préférence plusieurs sections (3', 3") de dureté différente.

16. Amortisseur selon l'une quelconque des revendications 1 à 15, pour des pièces de mobilier mobiles avec un cylindre qui contient un fluide d'amortissement et dans lequel peut être déplacé linéairement un piston avec une partie de piston qui est pressée radialement vers l'extérieur lors du processus d'amortissement et frotte contre la paroi de cylindre, **caractérisé en ce que** la partie de piston (3) est fabriquée comme un corps plein en un matériau aux propriétés élastiques du caoutchouc et est aplatie sous pression, Celle-ci se déformant de sorte qu'un engagement par friction entre la partie de piston (3) et la paroi de cylindre (15) apparaisse.

17. Amortisseur selon la revendication 16, **caractérisé en ce que** la partie de piston (3) est fabriquée en un élastomère.

18. Amortisseur selon la revendication 17, **caractérisé en ce que** la partie de piston (3) est fabriquée en un élastomère thermoplastique ou TPE.

19. Amortisseur selon la revendication 17, **caractérisé en ce que** la partie de piston (3) est fabriquée en caoutchouc de silicone liquide ou en LSR.

20. Amortisseur selon la revendication 16, **caractérisé en ce que** la partie de piston (3) est fabriquée en un caoutchouc de silicone.

21. Amortisseur selon l'une quelconque des revendications 1 à 20, **caractérisé en ce que** la dureté de la partie de piston (3) est comprise entre 40 et 85A Shore.

22. Amortisseur selon l'une quelconque des revendications 1 à 21, **caractérisé en ce que** la première partie de piston (3) est pourvue d'une lèvre d'étanchéité (7).

23. Amortisseur selon la revendication 22, **caractérisé en ce que** la lèvre d'étanchéité (7) repose sur la paroi de cylindre (15).

24. Amortisseur selon la revendication 22 ou 23, **caractérisé en ce que** la partie de piston (3) et la lèvre d'étanchéité (7) forment ensemble un corps monolithique.

25. Amortisseur selon la revendication 22 ou 23, **caractérisé en ce que** la partie de piston (3) et la lèvre d'étanchéité (7) sont fabriquées en matières plastiques de dureté différente.

26. Amortisseur selon la revendication 25, **caractérisé en ce que** la partie de piston (3) et la lèvre d'étanchéité (7) sont soudées ensemble.

27. Amortisseur selon la revendication 25, **caractérisé en ce que** la partie de piston (3) et la lèvre d'étanchéité (6) sont collées ensemble.

28. Amortisseur selon l'une quelconque des revendications 1 à 27, **caractérisé en ce que** la partie de piston (3) est pourvue sur sa surface latérale d'une rainure (11) s'étendant dans le sens axial.

29. Amortisseur selon l'une quelconque des revendications 1 à 28, **caractérisé en ce que** la première partie de piston (3) est réalisée à l'état exempt de pression en forme de cylindre et prend une forme bombée sous la pression de la surface latérale de la partie de piston (3).

30. Amortisseur selon l'une quelconque des revendications 1 à 29, **caractérisé en ce que** dans le cylindre (1) est disposé un ressort de compression (27) qui s'appuie d'une part sur une paroi frontale (1') du cylindre (1) et d'autre part sur la partie de piston (3), la force d'expansion de la partie de piston (3) élastique étant supérieure à la force du ressort de compression (27).
